# EUROPEAN PATENT SPECIFICATION

(11) **EP 2 530 773 B1**
(45) Date of publication and mention of the grant of the patent: **05.12.2018**
(21) Application number: 11753081.6
(22) Date of filing: 18.01.2011
(51) Int. Cl.: H01M 8/02, H01M 4/88, H01M 8/10

(54) **METHOD FOR MANUFACTURING MEMBRANE ELECTRODE ASSEMBLY**
VERFAHREN ZUR HERSTELLUNG EINER MEMBRANELEKTRODENANORDNUNG
PROCÉDÉ DE FABRICATION D'ENSEMBLE ÉLECTRODE À MEMBRANE

(30) Priority: 28.09.2010 JP 2010217811; 08.03.2010 JP 2010050339
(43) Date of publication of application: 05.12.2012
(73) Proprietor: Toppan Printing Co., Ltd., Tokyo 110-0016 (JP)
(72) Inventor: KIUCHI Shuji, Tokyo 110-0016 (JP)
(74) Representative: Staudt, Hans-Peter
(86) International application number: PCT/JP2011/050768
(87) International publication number: WO 2011/111419

(56) References cited:
- WO-A1-2004/051776
- WO-A1-2005/063466
- CA-A1- 2 330 718
- JP-A- 2000 182 632
- JP-A- 2001 196 070
- JP-A- 2003 132 899
- JP-A- 2003 132 899
- JP-A- 2003 257 438
- JP-A- 2003 257 438
- JP-A- 2005 217 278
- JP-A- 2005 302 589
- JP-A- 2006 134 611
- JP-A- 2006 203 221
- JP-A- 2009 037 916
- JP-A- 2009 054 600
- JP-A- 2009 134 953
- US-A1- 2007 184 331
- US-A1- 2010 051 181

## Description

### Technical Field

The present invention relates to a membrane-electrode assembly (MEA) producing method.

### Background Art

An example membrane-electrode producing method conventionally proposed is to perform thermal pressure bonding on a catalyst-layer supporting base material and a polymer electrolyte film, and to peel a transfer base material.

For example, Patent Document 1 discloses techniques of applying hot pressing and using hot rolls (thermal pressure bonding rolls). According to the technique using the hot rolls, an elongated polymer electrolyte film and an elongated catalyst-layer supporting base material having catalyst layers disposed on both sides thereof are caused to contact with each other, and thermal pressure bonding is applied to such a film and a base material through a pair of thermal pressure bonding rollers to join the polymer electrolyte film and the catalyst layer together. Thereafter, the transfer base material supporting the catalyst layer is peeled from the catalyst layer using a pair of peeling rolls.

Conversely, the technique of applying hot pressing is a technique of transferring the catalyst layer supported on the catalyst-layer supporting base material to the polymer electrolyte film through hot pressing. When the above-explained two techniques are compared with each other, the transfer technique using the hot rolls can successively transfer the catalyst layer to the polymer electrolyte film, and can increase the production speed in comparison with the technique through hot pressing.

The transfer technique through the hot rolls has a short time for thermal pressure bonding on the membrane-electrode assembly, and thus the bonding between the polymer electrolyte film and the catalyst layer is poor. With respect to this technical issue, Patent Document 2 discloses to pre-heat the polymer electrolyte film using a preheating heater before performing thermal pressure bonding through the hot rolls, and to perform thermal pressure bonding, thereby producing a membrane-electrode assembly with a high bonding strength. Moreover, the transfer base material supporting the catalyst layer is cooled in advance, and the membrane-electrode assembly having undergone the thermal pressure bonding is also cooled, thereby reducing the peel strength of the catalyst layer from the transfer base material to carry out a further better transfer.

### Prior Art Document

### Patent Documents

Patent Document 1: JP Hei10-64574 A
Patent Document 2: JP 2001-196070
Patent Document 3: US 2007/0184331
Patent Document 4: US2010/0051181
Patent Document 5: JP 2003132899 A

### Summary of the Invention

### Problem to be Solved

However, general polymer electrolyte films have an elongation remarkably increased when heated. The polymer electrolyte film and the catalyst-layer supporting base material elongated by thermal pressure bonding cause shrinkage due to cooling by external air when heating is no more applied. Since the polymer electrolyte film and the catalyst-layer supporting base material have a difference in elongation due to heat, wrinkles are formed due to the difference in shrinkage. It is confirmed that when the catalyst-layer supporting base material is peeled from a joined member having the polymer electrolyte film and the catalyst-layer supporting base material integrated together after the cooling, the polymer electrolyte film forms wrinkles.

In particular, when general polymer electrolyte film is heated to a temperature equal to or higher than a softening temperature (a temperature lower than the glass transition temperature by equal to or greater than 30 °C and by equal to or less than 50 °C or so), the elongation becomes remarkably large. In the case of a production device having the pre-heating mechanism, it is confirmed that the polymer electrolyte film and the catalyst-layer supporting base material are elongated at the time of pre-heating, and the membrane-electrode assembly produced with a difference in the elongation rate forms wrinkles. The formation of the wrinkles in the membrane-electrode assembly negatively affects the following production processes, and deteriorates the quality of the membrane-electrode assembly.

The present invention has been made in view of the above-explained technical issue, and it is an object of the present invention to provide a membrane-electrode assembly producing apparatus and a membrane-electrode assembly producing method which can increase the bonding strength between a polymer electrolyte film and a catalyst layer and which can produce a high-quality membrane-electrode assembly without a formation of wrinkle through a hot roll technique.

### Solution to the Problem

To achieve the above object, the invention provides a method of producing a membrane-electrode assembly as disclosed in claim 1.

### Advantageous Effects of the Invention

According to the membrane-electrode assembly producing method of the present invention, the catalyst-layer supporting base material and the polymer electrolyte film are pre-heated to let the polymer electrolyte film and the catalyst layer to be elongated, and then thermal pressure bonding is performed thereon. Accordingly, it becomes possible to prevent a formation of wrinkle in the membrane-electrode assembly. Moreover, the bonding strength between the polymer electrolyte film and the catalyst layer is enhanced, and thus it becomes possible to prevent the catalyst layer from being peeled from the polymer electrolyte film when the transfer base material is peeled.

Furthermore, the temperature of the joined member is adjusted before the transfer base material is peeled from the joined member. Accordingly, even if the joined member after the thermal pressure bonding is cooled by external air, it becomes possible to prevent a formation of wrinkle in the membrane-electrode assembly. Moreover, the bonding strength between the polymer electrolyte film and the catalyst layer is enhanced, and thus it becomes possible to prevent the catalyst layer from being peeled from the polymer electrolyte film when the transfer base material is peeled.

Still further, according to the membrane-electrode assembly producing method of the present invention, the pre-heating step of heating the catalyst-layer supporting base material and the polymer electrolyte film is divided into two stages, and the provisional pressure bonding step is performed therebetween. This makes it possible to produce the joined member precursor having no wrinkle. Second preheating is performed thereafter, and then thermal pressure bonding is performed. Hence, it becomes possible to prevent a formation of wrinkle in the membrane-electrode assembly, and to produce the joined member having the polymer electrolyte film and the catalyst layer with an enhanced bonding strength.

### Brief Description of the Drawings

FIG. 1 is a schematic view showing a membrane-electrode assembly producing apparatus according to a first embodiment;
FIG. 2 is a schematic view showing a membrane-electrode assembly producing apparatus according to a second embodiment;
FIG. 3A is a schematic view of a membrane-electrode assembly, and FIG. 3B is a schematic view of a joined member;
FIG. 4 is a diagram showing a production process of a membrane-electrode assembly according to the first embodiment of the present invention;
FIG. 5 is a diagram showing a production process of a membrane-electrode assembly according to the second embodiment of the present invention;
FIG. 6 is a schematic view showing a configuration of a membrane-electrode assembly producing apparatus according to a modified example of the first embodiment; and
FIG. 7 is a schematic view showing a configuration of a membrane-electrode assembly producing apparatus according to a modified example of the second embodiment.

### Description of Embodiments

### (Membrane-electrode Assembly Producing Apparatus)

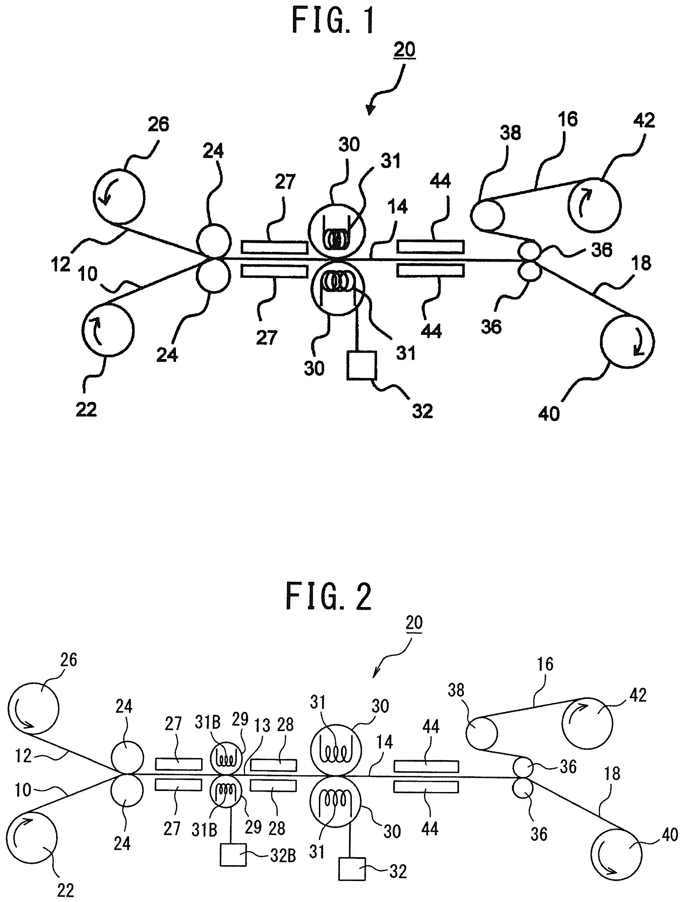

FIG. 1 is a schematic view for explaining a membrane-electrode assembly producing apparatus 20 according to a first embodiment. The membrane-electrode assembly producing apparatus 20 includes a feeding roller 22 that feeds a polymer electrolyte film 10, a pair of tension eliminating rollers 24 that eliminates the tension of the fed polymer electrolyte film 10, a feeding roller 26 that feeds a catalyst-layer supporting base material 12 having a catalyst layer supported on a face thereof, pre-heating heaters 28 that pre-heat the polymer electrolyte film 10 and the catalyst-layer supporting base material 12 with the polymer electrolyte film and the catalyst-layer supporting base material contacting with each other, a pair of thermal pressure bonding rollers 30 that heats and applies pressure to the polymer electrolyte film 10 and the catalyst-layer supporting base material 12 to form a joined member 14, temperature adjusting heaters 44 that adjust the temperature of the joined member 14, peeling rollers 36 that peel a transfer base material 16 from the joined member 14, a peeling angle setting roller 38 that sets the peeling angle of the transfer base material 16, a winding roller 42 that winds up the transfer base material 16, and a winding roller 40 that winds up a membrane-electrode assembly 18 having the transfer base material 16 peeled therefrom.

FIG. 2 is a schematic view for explaining a membrane-electrode assembly producing apparatus 20 according to a second embodiment. The membrane-electrode assembly producing apparatus 20 includes the feeding roller 22 that feeds the polymer electrolyte film 10, the pair of tension eliminating rollers 24 that eliminates the tension of the fed polymer electrolyte film 10, the feeding roller 26 that feeds the catalyst-layer supporting base material 12 having a catalyst layer supported on a face thereof, pre-heating heaters 27 that pre-heat the polymer electrolyte film 10 and the catalyst-layer supporting base material 12 with the polymer electrolyte film and the catalyst-layer supporting base material contacting with each other to a temperature equal to or lower than a softening temperature, a pair of provisional pressure bonding rollers 29 that heats and applies pressure to the polymer electrolyte film 10 and the catalyst-layer supporting base material 12 to form a joined member precursor 13, the pre-heating heaters 28 that increase the temperature of the joined member precursor 13 to a temperature equal to or higher than the glass transition temperature and equal to or lower than the thermal decomposition temperature, a pair of thermal pressure bonding rollers 30 that heats and applies pressure to the joined member precursor 13 to form the joined member 14, the temperature adjusting heaters 44 that adjust the temperature of the joined member 14, the peeling rollers 36 that peel the transfer base material 16 from the joined member 14, the peeling angle setting roller 38 that sets the peeling angle of the transfer base material 16, the winding roller 42 that winds up the transfer base material 16, and the winding roller 40 that winds up the membrane-electrode assembly 18 having the transfer base material 16 peeled therefrom.

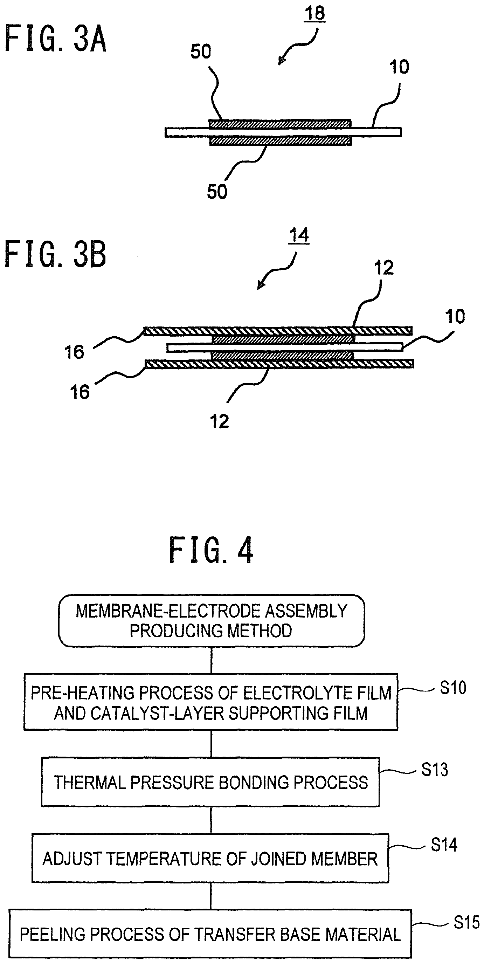

FIG. 3A is a schematic view of the membrane-electrode assembly 18. Moreover, FIG. 3B is a schematic view of the joined member 14. As shown in FIG. 3A, the membrane-electrode assembly 18 includes, as shown in FIG. 3A, the polymer electrolyte film 10 and catalyst layers 50 provided on both surfaces thereof. As shown in FIG. 3B, the membrane-electrode assembly 18 is formed by sticking the catalyst-layer supporting base materials 12 on both surfaces of the polymer electrolyte film 10 with the surface of the catalyst-layer supporting base material that supports the catalyst layer facing with the polymer electrolyte film 10 to form the joined member 14, and by peeling the transfer base material 16 from the joined member.

The polymer electrolyte film 10 is a high-molecule material showing a good proton conductivity in a moistened condition. The catalyst-layer supporting base material 12 has the catalyst layer 50 which is formed of a mixture of a resin and powder carbons supporting the catalyst formed of platinum or an alloy of platinum and other metals and which is formed on a surface of the transfer base material 16.

The specific examples of the polymer electrolyte film 10 and the catalyst-layer supporting base material 12 are explained below, but the present invention is not limited to such examples.

Specific examples of the material of the high-molecule material forming the polymer electrolyte film 10 are a fluorine-based high-molecule electrolyte, and a hydrocarbon-based high-molecule electrolyte. Examples of the fluorine-based high-molecule electrolyte are Nafion (registered trademark) made by Dupont Inc., Flemion (registered trademark) made by ASAHI Glass Co., Ltd. , Aciplex (registered trademark) made by ASAHI KASEI Corporation, and Gore Select (registered trademark) made by W. L. Gore & Associates, Inc. An example hydrocarbon-based high-molecule electrolyte is an electrolyte film, such as sulfonated-polyether-ketone, sulfonated-polyether-sulfone, sulfonated-polyether-ether-sulfone, sulfonated-polysulfide, and sulfonated-polyphenylene. In particular, Nafion (registered trademark) based materials made by Dupont Inc., can be appropriately used as the high-molecule electrolyte film. An example hydrocarbon-based high-molecule electrolyte is an electrolyte film, such as sulfonated-polyether-ketone, sulfonated-polyether-sulfone, sulfonated-polyether-ether-sulfone, sulfonated-polysulfide, and sulfonated-polyphenylene.

The polymer electrolyte film 10 is formed to a thickness of equal to or greater than 10 µm and equal to or smaller than 300 µm or so.

The resin used to form the catalyst layer 50 can be the same materials as those of the above-explained high-molecule material.

The catalyst used to form the catalyst layer 50 can be platinum group elements, such as platinum, palladium, ruthenium, iridium, rhodium, and osmium, and metals, such as iron, lead, copper, chrome, cobalt, nickel, manganese, vanadium, molybdenum, gallium, and aluminum, an alloy of platinum and such metals, an oxidative product of those, or a multiple oxide of those. In particular, platinum and a platinum alloy are preferable. Moreover, when the particle size of the catalyst is too large, the activity of the catalyst decreases, and when it is too small, the stability of the catalyst decreases. Accordingly, it is preferable that the particle size should be equal to or greater than 0.5 nm and equal to or smaller than 20 nm.

The powder carbons forming the catalyst layer 50 are not limited to any particular ones as long as those are minute particles, have an electrical conductivity, and do not corrode the catalyst. Specific examples of such powder carbons are carbon black, graphite, black lead, active charcoal, carbon fibers, carbon nanotubes, and fullerene. It is preferable that the particle size of the powder carbon should be equal to or greater than 10 nm and equal to or smaller than 100 nm which is smaller than that of the catalyst.

The transfer base material 16 is not limited to any particular one as long as it can have the catalyst layer 50 formed on a surface thereof and can transfer the formed catalyst layer 50 to the polymer electrolyte film 10, but for example, high-molecule films, such as polyimide, poly-ethylene-terephthalate, polyparabanic-acid-aramid, polyamide (nylon), polysulfone, polyether-sulfone, polyether-sulfone, polyphenylene-sulfide, polyether-ether-ketone, polyether-imide, polyacrylate, and polyethylene-naphthalate, can be used. Moreover, heat tolerant fluorine-based resins, such as ethylene-tetrafluoro-ethylene copolymer, tetrafluoro-ethylene-hexafluoro-propylene copolymer, tetrafluoro-perfluoro-alkyl-vinyl-ether copolymer, and polytetrafluoro-ethylene, can be used.

The tension eliminating rollers 24 rotate in synchronization with the feeding speed of the polymer electrolyte film 10 and that of the catalyst-layer supporting base material 12 by the rotation of thermal pressure bonding rollers 30. The tension eliminating rollers eliminate tension applied to the polymer electrolyte film 10 and the catalyst-layer supporting base material 12 when those are subjected to thermal pressure bonding by the thermal pressure bonding rollers 30. This suppresses a deformation of the polymer electrolyte film 10 and the catalyst-layer supporting base material 12 at the time of thermal pressure bonding. Moreover, the tension eliminating rollers 24 have a function of causing the polymer electrolyte film 10 and the catalyst-layer supporting base material 12 to contact with each other.

The pre-heating heaters 27 are capable of heating the polymer electrolyte film 10 and the catalyst-layer supporting base material 12 to a temperature which is equal to or lower than the softening temperature of the polymer electrolyte film 10 and which is set within a range from equal to or higher than 60 °C and to equal to or lower than 120 °C with the polymer electrolyte film 10 and the catalyst-layer supporting base material 12 contacting with each other.

The pair of provisional pressure bonding rollers 29 include heaters 31B which are provided in both provisional pressure bonding rollers 29, respectively, and which heat respective surfaces of such rollers. Moreover, a pressure device 32B that applies pressure between the provisional pressure bonding rollers is attached to the one provisional pressure bonding roller 29. The heaters 31B adjust the temperature of respective surfaces of the provisional pressure bonding rollers 29 within a range from equal to or higher than 60 °C and to equal to or lower than 120 °C around the softening temperature of the pressed polymer electrolyte film 10. Moreover, the pressure device 32B adjusts the pressure applied between the thermal pressure bonding rollers 29 within a range from equal to or higher than 10 MPa and to equal to or smaller than 100 MPa. As shown in FIG. 2, both upper and lower provisional pressure bonding rollers 29 are capable of heating. By pre-heating the polymer electrolyte film 10 and the catalyst-layer supporting base material 12 by the pre-heating heaters 27 with the polymer electrolyte film and the catalyst-layer supporting base material contacting with each other, and by performing provisional pressure bonding on both polymer electrolyte film and the catalyst-layer supporting base material by the provisional pressure bonding rollers 29, it becomes possible to form the joined member precursor 13 including the catalyst layer 50 and the polymer electrolyte film 10 having a stable shape without any wrinkles.

The pre-heating heaters 28 can heat the joined member precursor 13 to a temperature equal to or higher than the glass transition temperature of the polymer electrolyte film 10 and equal to or lower than the thermal decomposition temperature thereof, more specifically, a temperature set within a range from equal to or higher than 80 °C and to equal to or lower than 140 °C.

The pair of thermal pressure bonding rollers 30 include respective heaters 31 which are provided in both thermal pressure bonding rollers 30 and which heat respective surfaces of the thermal pressure bonding rollers. The pressure device 32 that applies pressure between the thermal pressure bonding rollers is attached to the one thermal pressure bonding roller 30. The heaters 31 adjust a temperature within a range from equal to or higher than 80 °C and to equal to or lower than 140 °C around the glass transition temperature of the pressed polymer electrolyte film 10. Moreover, the pressure device 32 adjusts the pressure applied between the thermal pressure bonding rollers 30 within a range from equal to or higher than 10 MPa and to equal to or smaller than 100 MPa. As shown in FIGS. 1 and 2, both upper and lower thermal pressure bonding rollers 30 are capable of heating. By pre-heating the polymer electrolyte film 10 and the catalyst-layer supporting base material 12 by the pre-heating heaters 27 or 28 with the polymer electrolyte film and the catalyst-layer supporting base material contacting with each other, and by performing thermal pressure bonding on the polymer electrolyte film and the catalyst-layer supporting base material by the thermal pressure bonding rollers 30, it becomes possible to increase the bonding level of the catalyst layer 50 with the polymer electrolyte film 10.

The temperature adjusting heaters 44 adjust the temperature of the joined member 14 to a temperature set within a range from equal to or higher than 60 °C and to equal to or lower than 120°C. Moreover, the temperature adjusting heaters 44 are capable of adjusting a temperature to be a temperature lower than the temperature of thermal pressure bonding by up to 20 °C.

The peeling rollers 36 and the peeling angle setting roller 38 have respective positions and diameters adjusted in such a way that the transfer base material 16 peeled by the peeling rollers 36 and the membrane-electrode assembly 18 can be moved to substantially opposite directions, respectively. For example, the peeling roller 36 has a diameter of equal to or smaller than 30 mm and the angle between the peeled transfer base material 16 and the membrane-electrode assembly 18 is adjusted to substantially 180 degrees.

### (Membrane-electrode Assembly Producing Method)

Next, an explanation will be given of respective processes of producing the membrane-electrode assembly 18 by the membrane-electrode assembly producing apparatus 20 according to the embodiments.

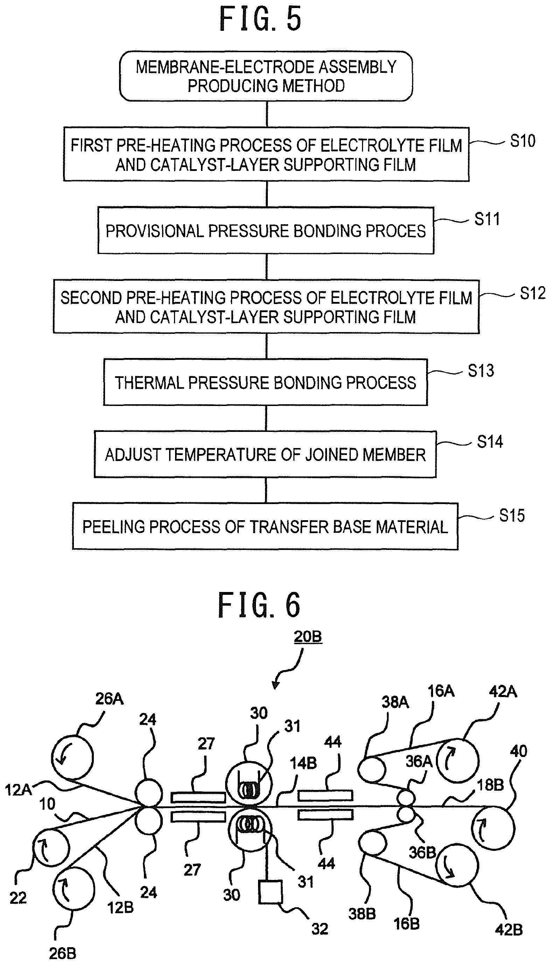

FIG. 4 is a production process diagram illustrating steps of producing the membrane-electrode assembly 18 according to the first embodiment. Moreover, FIG. 5 is a production process diagram illustrating stepsof producing the membrane-electrode assembly 18 according to the second embodiment. To produce the membrane-electrode assembly 18, first of all, the polymer electrolyte film 10 fed from the feeding roller 22 and the catalyst-layer supporting base material 12 fed from the feeding roller 26 are caused to contact with each other by the tension eliminating rollers 24, and respective tensions are eliminated. The polymer electrolyte film 10 and the catalyst-layer supporting base material 12 having respective tensions eliminated are pre-heated by the pre-heating heaters 27 with the polymer electrolyte film and the catalyst-layer supporting base material contacting with each other (step S10). This pre-heating is carried out at a temperature set within a range from equal to or higher than 60 °C and to equal to or lower than 120 °C. The pre-heating in the step S10 will be referred to as a pre-heating step or a first pre-heating step below in some cases.

The pre-heating of the polymer electrolyte film 10 and the catalyst-layer supporting base material 12 is carried out with both polymer electrolyte film and catalyst-layer supporting base material being caused to contact with each other by the tension eliminating rollers 24. At this time, the polymer electrolyte film 10 and the catalyst-layer supporting base material 12 contacting with each other are fed in the pre-heating heaters 28. The reason why the pre-heating is carried out with the polymer electrolyte film 10 and the catalyst-layer supporting base material 12 contacting with each other is to cause the polymer electrolyte film 10 and the catalyst layer 50 supported on the catalyst-layer supporting base material 12 to tightly contact with each other and to increase the bonding strength of the polymer electrolyte film 10 and the catalyst layer 50, thereby sticking those with each other without a wrinkle.

Next, the polymer electrolyte film 10 and the catalyst-layer supporting base material 12 having undergone the pre-heating are heated and pressed (hot pressing) by the provisional pressure bonding rollers 29 having the heaters 31B and the pressure device 32B with such a film and a base material contacting with each other. The heated and pressed polymer electrolyte film 10 and catalyst-layer supporting base material 12 become the joined member precursor 13 (step S11). The hot pressing in the step S11 will be referred to as provisional pressure bonding in the embodiments. The provisional pressure bonding is carried out at a temperature set within the same temperature range (from equal to or higher than 60 °C and to equal to or lower than 120 °C) set for the first pre-heating step. The pressing is carried out at a pressure set within a range from equal to or higher than 10 MPa and to equal to or smaller than 100 MPa. This is because when the provisional pressure bonding is carried out at a temperature lower than that of the first pre-heating step1, the polymer electrolyte film 10 and the catalyst layer 50 form wrinkles in the later steps and thus it becomes unable to produce the membrane-electrode assembly. Moreover, when the provisional pressure bonding is carried out at a temperature higher than the temperature range of the first pre-heating step1, the polymer electrolyte film deforms due to heat, and forms wrinkles. Regarding the pressure application of the provisional pressure bonding, when the pressure is lower than the range from equal to or higher than 10 MPa and to equal to or smaller than 100 MPa, the bonding force becomes insufficient, and it becomes unable to produce the joined member precursor 13, and when it is higher than the pressure range from equal to or higher than 10 MPa and to equal to or smaller than 100 MPa, the joined member precursor 13 is deteriorated due to the high pressure.

Next, the joined member precursor 13 is subjected to a temperature rise to a temperature equal to or higher than the glass transition temperature of the polymer electrolyte film 10 and equal to or lower than the thermal decomposition temperature thereof by the pre-heating heaters 28 (step S12) . The specific temperature equal to or higher than the glass transition temperature and equal to or lower than the thermal decomposition temperature is a temperature set within a range from equal to or higher than 80 °C and to equal to or lower than 140 °C. Moreover, the pre-heating in the step S12 will be referred to as a second pre-heating step in some cases. Execution of the step S12 increases the bonding strength of the polymer electrolyte film 10 and the catalyst layer 50.

Next, the polymer electrolyte film 10 and the catalyst-layer supporting base material 12 having undergone the pre-heating and in a contacting condition with each other, or the joined member precursor 13 is heated and pressed (hot pressing) by the thermal pressure bonding rollers 30 and becomes the joined member 14 (step S13). The hot pressing in the step S13 will be referred to as thermal pressure bonding in the embodiments in some cases. The thermal pressure bonding is carried out at a temperature set within a range from equal to or higher than 80 °C and to equal to or lower than 140 °C and at a pressure set within a range from equal to or higher than 10 MPa and to equal to or smaller than 100 MPa. In the case of the temperature lower than such a range, the bonding of the polymer electrolyte film 10 and the catalyst layer 50 becomes poor, and it becomes unable to produce the membrane-electrode assembly, and in the case of the temperature higher than the above-explained range, the polymer electrolyte film deforms and is deteriorated due to heat. The same is true of the pressure, and in the case of the pressure lower than the above-explained range, it becomes unable to produce the membrane-electrode assembly, and in the case of the pressure higher than the above-explained range, the membrane-electrode assembly is deteriorated due to the high pressure.

The joined member 14 has a temperature adjusted by the temperature adjusting heaters 44 to a temperature lower than the temperature of thermal pressure bonding by up to 20°C (step S14). Next, the transfer base material 16 is peeled from the joined member 14 by the peeling rollers 36 (step S15) . The membrane-electrode assembly 18 is produced through the above-explained steps. The finished membrane-electrode assembly 18 is wound by the winding roller 42, and the peeled transfer base material 16 is wound by the winding roller 40.

According to the above-explained membrane-electrode assembly producing apparatus 20 and membrane-electrode assembly producing method of the embodiments, the polymer electrolytic film 10 and the catalyst-layer supporting base material 12 are preliminary caused to contact with each other by the tension eliminating rollers 24 before the hot pressing on the polymer electrolytic film 10 and the catalyst-layer supporting base material 12 is performed, and pre-heating by the pre-heating heaters 27 is performed. Accordingly, the bonding strength of the polymer electrolytic film 10 and the catalyst layer 50 can be enhanced.

In particular, the pre-heating is performed on the polymer electrolytic film and the catalyst-layer supporting base material by the pre-heating heaters 27 at a temperature of equal to or lower than the softening temperature of the polymer electrolytic film 10, and such a film and a base material are subjected to provisional pressure bonding by the provisional pressure bonding rollers 29. This enables to form the joined member precursor 13 from the polymer electrolytic film 10 and the catalyst-layer supporting base material 12 without a wrinkle. Moreover, the joined member precursor 13 is subjected to a temperature rising by the pre-heating heaters 28 to a temperature equal to or higher than the glass transition temperature of the polymer electrolytic film 10 and equal to or lower than the thermal decomposition temperature thereof, and is subjected to pressure bonding by the thermal pressure bonding rollers 30. Hence, it becomes possible to produce the joined member 14 having the polymer electrolytic film 10 and the catalyst layer 50 firmly bonded with each other.

After the temperature of the catalyst-layer supporting base material 12 is adjusted by the temperature adjusting heaters 44, the transfer base material 16 is peeled from the joined member 14, and thus formation of wrinkles in the membrane-electrode assembly 18 due to cooling by external air, etc., can be suppressed.

In particular, the transfer base material 16 is peeled from the joined member 14 after the temperature of the catalyst-layer supporting base material 12 is adjusted by the temperature adjusting heaters 44 to a temperature lower than that of the thermal pressure bonding rollers 30 by 20 °C. Accordingly, formation of wrinkles in the membrane-electrode assembly 18 due to cooling by external air, etc., can be suppressed.

Since the peeling roller 36 is set to have a diameter of equal to or smaller than 30 mm and the angle between the transfer base material 16 and the membrane-electrode assembly 18 is set to be substantially 180 degrees, the peeling performance of the transfer base material 16 can be improved, resulting in a formation of the membrane-electrode assembly 18 with a good shape.

According to the membrane-electrode assembly producing apparatus 20 of the embodiments, the catalyst-layer supporting base material 12 and the polymer electrolyte film 10 are caused to contact with each other by the tension eliminating rollers 24 and are pre-heated, but such pre-heating may be individually performed on the catalyst-layer supporting base material 12 and the polymer electrolyte film 10. According to the embodiments, however, as shown in FIGS. 1 and 2, it is preferable to perform pre-heating with the catalyst-layer supporting base material 12 and the polymer electrolyte film 10 contacting with each other. In the cases of FIGS. 1 and 2, pre-heating is performed from both sides with the polymer electrolyte film 10 and the catalyst-layer supporting base material 12 contacting with each other. However, pre-heating may be performed only from one side with the polymer electrolytic film 10 and the catalyst-layer supporting base material 12 contacting with each other.

According to the membrane-electrode assembly producing apparatus 20 of the embodiments, the set temperature of the pre-heating heaters 27 is determined based on the material of the polymer electrolyte film 10 and that of the catalyst-layer supporting base material 12, and is not limited to the temperature set within the above-explained range from equal to or higher than 60 °C and to equal to or lower than 120 °C in some cases. A temperature appropriate for the material of the polymer electrolyte film 10 and that of the catalyst-layer supporting base material 12 can be set as needed. However, it is more preferable that the set temperature of the pre-heating heaters 27 should be equal to or lower than the softening temperature of the polymer electrolyte film 10.

According to the membrane-electrode assembly producing apparatus 20 of the embodiments, the set temperature of the pre-heating heaters 28 is determined based on the material of the polymer electrolyte film 10 and that of the catalyst-layer supporting base material 12, and is not limited to the temperature set within the above-explained range from equal to or higher than 80 °C and to equal to or lower than 140 °C in some cases. A temperature appropriate for the material of the polymer electrolyte film 10 and that of the catalyst-layer supporting base material 12 can be set as needed. However, it is more preferable that the set temperature of the pre-heating heaters 28 should be equal to or higher than the glass transition temperature of the polymer electrolyte film 10 and equal to or lower than the thermal decomposition temperature thereof.

According to the membrane-electrode assembly producing apparatus 20 of the embodiments, the surface temperature or pressure of the provisional pressure bonding rollers 29 is determined based on the material of the polymer electrolyte film 10 and that of the catalyst-layer supporting base material 12, and is not limited to the temperature set within the above-explained range from equal to or higher than 60 °C and to equal to or lower than 120 °C or the pressure set within the above-explained range from equal to or higher than 10 MPa and to equal to or smaller than 100 MPa in some cases. A temperature or a pressure appropriate for the material of the polymer electrolyte film 10 and that of the catalyst-layer supporting base material 12 can be set as needed. However, it is more preferable that the surface temperature of the provisional pressure bonding rollers 29 should be near the softening temperature of the polymer electrolyte film 10.

According to the membrane-electrode assembly producing apparatus 20 of the embodiments, the surface temperature or pressure of the thermal pressure bonding rollers 30 is determined based on the material of the polymer electrolyte film 10 and that of the catalyst-layer supporting base material 12, and is not limited to the temperature set within the above-explained range from equal to or higher than 80 °C and to equal to or lower than 140 °C or the pressure set within the above-explained range from equal to or higher than 10 MPa and to equal to or smaller than 100 MPa in some cases. A temperature or a pressure appropriate for the material of the polymer electrolyte film 10 and that of the catalyst-layer supporting base material 12 can be set as needed. However, it is more preferable that the surface temperature of the thermal pressure bonding rollers 30 should be near the glass transition temperature of the polymer electrolyte film 10.

According to the membrane-electrode assembly producing apparatus 20 of the embodiments, the temperature of the joined member 14 is adjusted through the temperature adjusting heaters 44. However, the temperature of the joined member 14 may be maintained to be high by reducing the carrying time of the thermal pressure bonding rollers 30 and that of the peeling rollers 36. Moreover, in the cases of FIGS. 1 and 2, the temperature of the joined member 14 is adjusted through both surfaces thereof but the temperature adjustment may be performed through only one surface of the joined member.

According to the membrane-electrode assembly producing apparatus 20 of the embodiments, the diameter of the peeling roller 36 is set to be equal to or smaller than 30 mm, but such a diameter may be larger than 30 mm depending on the largeness of the bonding strength between the catalyst layer 50 and the transfer base material 16 and that of the bonding strength between the catalyst layer and the polymer electrolyte film 10.

According to the membrane-electrode assembly producing apparatus 20 of the embodiments, although it is fine if the angle between the transfer base material 16 peeled by the peeling rollers 36 and the membrane-electrode assembly 18 is adjusted to be substantially 180 degrees, such an angle may be adjusted to be an angle other than 180 degrees in consideration of the peeling performance of the transfer base material 16.

According to the membrane-electrode assembly producing apparatus 20 of the embodiments, the temperature of the joined member 14 is adjusted by the temperature adjusting heaters 44. However, heaters may be provided in respective peeling rollers 36, and the temperature adjustment may be carried out simultaneously with the peeling.

It is fine if the membrane-electrode assembly producing apparatus 20 of the embodiments includes at least pre-heating unit for pre-heating the catalyst-layer supporting base material 12 and the polymer electrolyte film 10 (e.g., the pre-heating heaters 27 correspond to this unit), thermal pressure bonding unit for forming the joined member 14 (e.g., the thermal pressure bonding rollers 30 correspond to this unit), and peeling unit for peeling the transfer base material 16 from the joined member 14 (e.g., the peeling rollers 36 correspond to this unit).

Moreover, in order to further accomplish the advantages of the present invention, in addition to the above-explained configurations, temperature adjusting unit for adjusting the temperature of the joined member 14 (e.g., the temperature adjusting heaters 44 correspond to this unit), first thermal pressure bonding unit for forming the joined member precursor 13 (e.g., the provisional pressure bonding rollers 29 correspond to this unit), and second pre-heating unit for pre-heating the joined member precursor 13 (e.g., the pre-heating heaters 28 correspond to this unit), etc., may be added in solo or in combination with other unit.

### (Modifications)

According to the membrane-electrode assembly producing apparatus 20 of the embodiments, the membrane-electrode assembly 18 having the catalyst layer 50 bonded on one surface of the polymer electrolyte film 10 is produced. However, a membrane-electrode assembly 18B may be produced which have the catalyst layers 50 bonded on respective both surfaces of the polymer electrolyte film 10.

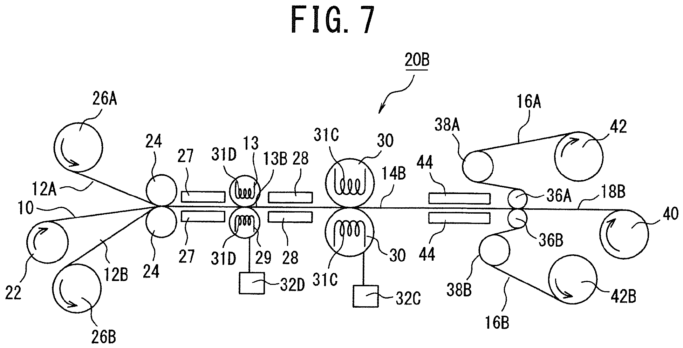

FIGS. 6 and 7 are schematic views for respectively explaining a membrane-electrode assembly producing apparatus 20B that is a modification of the membrane-electrode assembly producing apparatuses 20 of the first embodiment and the second embodiment. As shown in the figures, the membrane-electrode assembly producing apparatus 20B causes the polymer electrolyte film 10 fed from the feeding roller 22 and two catalyst-layer supporting base materials 12A and 12B fed from respective two feeding rollers 26A and 26B to contact with each other by the tension eliminating rollers 24, and the tension eliminating rollers eliminate respective tensions.

Next, the polymer electrolyte film 10 and the catalyst-layer supporting base materials 12A and 12B in contact with each other are pre-heated by the pre-heating heaters 27, and are subjected to thermal pressure bonding by the thermal pressure bonding rollers 30 including the heaters 31 and the pressure device 32.

Alternatively, the polymer electrolyte film 10 and the catalyst-layer supporting base materials 12A and 12B in in contact with each other are pre-heated by the pre-heating heaters 27 to a temperature equal to or lower than the softening temperature, and are subjected to provisional pressure bonding by the provisional pressure bonding rollers 29 including heaters 31D and a pressure device 32D to form a joined member precursor 13B. Subsequently, the joined member precursor 13B is subjected to a temperature rise by the pre-heating heaters 28 to a temperature equal to or higher than the glass transition temperature of the polymer electrolyte film 10 and equal to or lower than the thermal decomposition temperature thereof. The joined member precursor 13B having undergone the temperature rise is subjected to thermal pressure bonding by the thermal pressure bonding rollers 30 including heaters 31C and a pressure device 32C.

The joined member 14B joined by the thermal pressure bonding is adjusted by the temperature adjusting heaters 44 to a temperature lower than the temperature of the thermal pressure bonding rollers 30 by 20 °C. Next, transfer base materials 16A and 16B are peeled from the joined member 14B by two peeling rollers 36A and 36B and two peeling angle setting rollers 38A and 38B, respectively, and thus the membrane-electrode assembly 18B is produced which has the catalyst layers bonded on both surfaces of the polymer electrolyte film 10. The membrane-electrode assembly 18B is wound by the winding roller 40, and the two transfer base materials 16A and 16B are wound by respective winding rollers 42A and 42B.

According to the above-explained membrane-electrode assembly producing apparatuses 20B of the modifications, it becomes possible to produce the membrane-electrode assembly 18B which has the catalyst layers 50 bonded on both surfaces of the polymer electrolyte film 10 in a good shape.

### Industrial Applicability

According to the present invention, it becomes possible to efficiently produce a membrane-electrode assembly (MEA) with a good quality.

### Reference Signs List

10 Polymer electrolyte film
12, 12A, 12B Catalyst-layer supporting base material
13, 13B Joined member precursor
14, 14B Joined member
16, 16A, 16B Transfer base material
18, 18B Membrane-electrode assembly
20, 20, 20B Membrane-electrode assembly producing apparatus
22 Feeding roller
24 Tension eliminating roller
26, 26A, 26B Feeding roller
27, 28 Pre-heating heater
29 Provisional pressure bonding roller
30 Thermal pressure bonding roller
31, 31B, 31C, 31D Heater
32, 32B, 32C, 32D Pressure device
36, 36A, 36B Peeling roller
38, 38A, 38B Peeling angle setting roller
40 Winding roller
42, 42A, 42B Winding roller
44 Temperature adjusting roller
50 Catalyst layer

## Claims

1. A membrane-electrode assembly producing method that produces a membrane-electrode assembly comprising a catalyst layer and a polymer electrolyte film, the method comprising:
a pre-heating step of pre-heating a catalyst-layer supporting base material that supports the catalyst layer on a surface of a transfer base material, and the polymer electrolyte film;
a thermal pressure bonding step of heating and pressing the catalyst-layer supporting base material and the polymer electrolyte film to form an integrated joined member;
a peeling step of peeling the transfer base material from the joined member; and
a temperature adjusting step of adjusting a temperature of the joined member before the transfer base material is peeled from the joined member,
wherein the pre-heating step comprises a first pre-heating step of pre-heating the catalyst-layer supporting base material and the polymer electrolyte film to a temperature equal to or lower than a softening temperature of the polymer electrolyte film, which is a temperature equal to or higher than 60°C to equal to or lower than 120°C, in contact with each other, and
wherein the thermal pressure rolling bonding step is carried out at a temperature from equal to or higher than 60°C to equal to or lower than 120°C and at a pressure equal to or higher than 10MPa to equal to or lower than 100MPa,
**characterized in that**,
the temperature adjusting step comprises adjusting the temperature of the joined member to a temperature lower than the temperature of thermal pressure bonding by up to 20°C.

2. The membrane-electrode assembly producing method according to claim 1, wherein the thermal pressure bonding step comprises:
a first thermal pressure bonding step of heating and pressing the catalyst-layer supporting base material and the polymer electrolyte film at a temperature near the softening temperature of the polymer electrolyte film to form a joined member precursor of the catalyst-layer supporting base material and the polymer electrolyte film integrated together; and
a second thermal pressure bonding step of heating and pressing the joined member precursor at a temperature near a glass transition temperature of the polymer electrolyte film to form the joined member.

3. The membrane-electrode assembly producing method according to claim 2, further comprising a second pre-heating step of pre-heating, after the first thermal pressure bonding step, the joined member precursor to a temperature equal to or higher than the glass transition temperature of the polymer electrolyte film and equal to or lower than a thermal decomposition temperature of the polymer electrolyte film.

## Patentansprüche

1. Herstellungsverfahren für einen Membran-Elektrodenaufbau, bei dem ein Membran-Elektrodenaufbau hergestellt wird, der eine Katalysatorschicht und einen Polymer-Elektrolytfilm umfasst, wobei das Verfahren umfasst:
einen Vorheizschritt zum Vorheizen eines eine Katalysatorschicht tragenden Basismaterials, das die Katalysatorschicht auf einer Oberfläche eines Transferbasismaterials trägt, und des Polymer-Elektrolytfilms;
einen thermischen Pressverbindungsschritt zum Erwärmen und Pressen des die Katalysatorschicht tragenden Basismaterials und des Polymer-Elektrolytfilms, um ein integriertes, zusammengefügtes Element zu bilden;
einen Abschälschritt zum Abschälen des Transferbasismaterials von dem zusammengefügten Element; und
einen Temperatureinstellschritt zum Einstellen einer Temperatur des zusammengefügten Elements, bevor das Transferbasismaterial von dem zusammengefügten Element abgeschält wird,
wobei der Vorheizschritt einen ersten Vorheizschritt zum Vorheizen des die Katalysatorschicht tragenden Basismaterials und des Polymer-Elektrolytfilms auf eine Temperatur gleich oder niedriger als eine Erweichungstemperatur des Polymer-Elektrolytfilms, welches eine Temperatur gleich oder höher als 60 °C bis gleich oder niedriger als 120 °C ist, im Kontakt miteinander umfasst, und
wobei der thermische Presswalz-Verbindungsschritt bei einer Temperatur von gleich oder höher als 60 °C bis gleich oder niedriger als 120 °C und einem Druck von gleich oder höher als 10 MPa bis gleich oder niedriger als 100 MPa durchgeführt wird,
**dadurch gekennzeichnet, dass**
der Temperatureinstellschritt das Einstellen der Temperatur des zusammengefügten Elements auf eine Temperatur um bis zu 20 °C niedriger als die Temperatur des thermischen Pressverbindens umfasst.

2. Herstellungsverfahren für einen Membran-Elektrodenaufbau gemäß Anspruch 1, wobei der thermische Pressverbindungsschritt umfasst:
einen ersten thermischen Pressverbindungsschritt zum Erwärmen und Pressen des die Katalysatorschicht tragenden Basismaterials und des Polymer-Elektrolytfilms bei einer Temperatur nahe der Erweichungstemperatur des Polymer-Elektrolytfilms, um einen Vorläufer für ein zusammengefügtes Element des die Katalysatorschicht tragenden Basismaterials und des Polymer-Elektrolytfilms, die miteinander integriert sind, zu bilden; und
einen zweiten thermischen Pressverbindungsschritt zum Erwärmen und Pressen des Vorläufers für das zusammengefügte Element bei einer Temperatur nahe einer Glasübergangstemperatur des Polymer-Elektrolytfilms, um das zusammengefügte Element zu bilden.

3. Herstellungsverfahren für einen Membran-Elektrodenaufbau gemäß Anspruch 2, ferner umfassend einen zweiten Vorheizschritt zum Vorheizen, nach dem ersten thermischen Pressverbindungsschritt, des Vorläufers für das zusammengefügte Element auf eine Temperatur gleich oder höher als die Glasübergangstemperatur des Polymer-Elektrolytfilms und gleich oder niedriger als eine thermische Zersetzungstemperatur des Polymer-Elektrolytfilms.

## Revendications

1. Procédé de fabrication d'ensemble membrane-électrode qui permet de fabriquer un ensemble membrane-électrode comprenant une couche de catalyseur et un film d'électrolyte polymère, le procédé comprenant :
une étape de préchauffage consistant à préchauffer un matériau de base de support de couche de catalyseur qui supporte la couche de catalyseur sur une surface de matériau de base de transfert, et le film d'électrolyte polymère ;
une étape de liaison thermique sous pression consistant à chauffer et à comprimer le matériau de base de support de couche de catalyseur et le film d'électrolyte polymère pour former un élément assemblé intégré ;
une étape de décollage consistant à décoller le matériau de base de transfert de l'élément assemblé ; et
une étape de réglage de température consistant à régler une température de l'élément assemblé, avant que le matériau de base de transfert ne soit décollé de l'élément assemblé,
dans lequel l'étape de préchauffage comprend une première étape de préchauffage consistant à préchauffer le matériau de base de support de couche de catalyseur et le film d'électrolyte polymère à une température inférieure ou égale à une température de ramollissement du film d'électrolyte polymère, qui est une température supérieure ou égale à 60 °C et inférieure ou égale à 120 °C, l'un au contact de l'autre, et
dans lequel l'étape de liaison thermique sous pression par rouleaux est réalisée à une température supérieure ou égale à 60 °C et inférieure ou égale à 120 °C et à une pression supérieure ou égale à 10 MPa et inférieure ou égale à 100 MPa,
**caractérisé en ce que** :
l'étape de réglage de température comprend le réglage de la température de l'élément assemblé à une température inférieure à la température de la liaison thermique sous pression d'au plus 20 °C.

2. Procédé de fabrication d'ensemble membrane-électrode selon la revendication 1, dans lequel l'étape de liaison thermique sous pression comprend :
une première étape de liaison thermique sous pression consistant à chauffer et à comprimer le matériau de base de support de couche de catalyseur et le film d'électrolyte polymère, à une température voisine de la température de ramollissement du film d'électrolyte polymère pour former un précurseur d'élément assemblé composé du matériau de base de support de couche de catalyseur et du film d'électrolyte polymère, intégrés l'un à l'autre ; et
une seconde étape de liaison thermique sous pression consistant à chauffer et à comprimer le précurseur d'élément assemblé à une température voisine de la température de transition vitreuse du film d'électrolyte polymère pour former l'élément assemblé.

3. Procédé de fabrication d'ensemble membrane-électrode selon la revendication 2, comprenant en outre une seconde étape de préchauffage consistant à préchauffer, après la première étape de liaison thermique sous pression, le précurseur d'élément assemblé à une température supérieure ou égale à la température de transition vitreuse du film d'électrolyte polymère et inférieure ou égale à une température de décomposition thermique du film d'électrolyte polymère.
